# FASCICULE DE BREVET EUROPEEN

(11) **EP 4 503 933 B1**
(45) Date de publication et mention de la délivrance du brevet: **09.12.2026**
(21) Numéro de dépôt: 23713694.0
(22) Date de dépôt: 04.04.2023
(51) Int. Cl.: A01N 63/14, A01P 7/02, A01P 7/04

(54) **UTILISATION DE GRAISSE D'INSECTE COMME PESTICIDE**
VERWENDUNG VON INSEKTENFETT ALS PESTIZID
USE OF INSECT FAT AS PESTICIDE

(30) Priorité: 06.04.2022 FR 2203140
(43) Date de publication de la demande: 12.02.2025
(73) Titulaire: Innovafeed, 80190 Nesle (FR)
(72) Inventeur: RAY, Clement, 75005 Paris (FR); WALRAVEN, Maye, 75018 Paris (FR); BEZAGU, Marine, 92120 Montrouge (FR); LEBRET, David, 35560 Noyal sous Bazouges (FR)
(74) Mandataire: Lavoix
(86) Numéro de dépôt international: PCT/EP2023/058873
(87) Numéro de publication internationale: WO 2023/194397

(56) Documents cités:
- WO-A1-2015/013826
- WO-A1-2021/093843
- WO-A1-2021/133166
- CN-A- 103 655 627
- CN-A- 109 497 103
- KR-A- 20190 024 389

## Description

La présente invention concerne l'utilisation de graisse de larves d'insecte selon la revendication 1.

Les mesures de lutte contre les ravageurs (ou nuisibles) comprennent généralement des méthodes chimiques, biologiques, physiques, mécaniques et/ou culturales. Les méthodes chimiques utilisent des pesticides, mais les conséquences de tels produits sont bien connues et hautement problématiques. D'une part, les risques environnementaux sont réels et induisent une méfiance des consommateurs. D'autre part, ces produits sont interdits en agriculture biologique ou raisonnée, ce qui incite à la recherche de substituts pour ces filières. Enfin, en raison des effets néfastes connus des insecticides chimiques sur les humains et l'environnement et du développement de la résistance des ravageurs, ces méthodes sont limitées aux situations d'infestation incontrôlable des ravageurs.

Il existe donc un besoin pour des alternatives naturelles aux pesticides chimiques.

Plusieurs pesticides naturels à base d'huiles végétales existent sur le marché : on trouve notamment l'huile de tournesol, insecticide par contact et dont l'autorisation a été demandée et est en cours d'approbation ; l'huile de neem (margousier), insecticide et acaricide naturel ; ou encore l'huile de colza, insecticide polyvalent.

Cependant, la production de ces huiles nécessite de grandes surfaces cultivables, qui ne sont donc pas utilisées dans un but nourricier.

En outre, les mesures de lutte culturale sont des méthodes de lutte préventives et nécessitent beaucoup de pré-planification et d'étude préalable des relations hôte-ravageur-environnement. Ces méthodes fonctionnent selon le principe de rendre l'environnement moins attrayant pour les ravageurs et moins favorable à leur survie, leur dispersion, leur croissance et leur reproduction. Les mesures de lutte biologique consistent notamment à permettre l'accumulation d'insectes prédateurs naturels dans l'écosystème. Les méthodes physiques de lutte antiparasitaire comprennent l'utilisation de moyens physiques tels que des clôtures, des barrières ou des fils électroniques. Les méthodes mécaniques de contrôle comprennent la cueillette à la main, les pièges, l'aspiration et le travail du sol pour perturber la reproduction.

Cependant, un inconvénient de ces méthodes (culturales et biologiques) est qu'elles prennent beaucoup de temps, qu'elles sont mises en place et planifiées à grande échelle et qu'elles peuvent s'avérer très coûteuses. Les méthodes mécaniques et physiques sont non spécifiques et inefficaces.

CN 109 497 103 A décrit une composition antimicrobienne comprenant un extrait lipidique de *Hermetia illucens* à appliquer sur du lisier. Ce document ne décrit pas l'action insecticide/acaricide de l'extrait, et encore moins issu de larves. WO 2015/013826 A1 concerne l'effet insecticide d'excréments de *Hermetia illucens.* Il est connu que ces excréments contiennent de la graisse. Toutefois, l'utilisation spécifique de la graisse des larves n'est pas décrite dans ce document

Ainsi, il existe un besoin pour un procédé de lutte contre les nuisibles dans les plantations cultivées, qui soit peu coûteux, facile à mettre en place et ne souffre pas non plus d'inconvénients de toxicité chimique pour l'homme et l'environnement. Il existe également un besoin pour des pesticides d'origine non chimique, faciles à fabriquer et efficaces.

La présente invention répond à ce problème. Elle a pour objet l'utilisation de graisse de larves d'insecte selon la revendication 1.

Ladite graisse d'insecte est d'origine naturelle, i.e. non chimique. Elle est facile à obtenir ; son procédé d'obtention est relativement simple. Enfin, comme montré dans les exemples, elle est efficace comme pesticide, et efficace par rapport aux pesticides chimiques traditionnels.

La présente invention se rapporte ainsi à l'utilisation d'une graisse de larves d'insecte selon la revendication 1.

La présente invention se rapporte également à un procédé de traitement d'une culture, comprenant l'application d'une graisse de larves d'insecte spécifique sur ladite culture, selon la revendication 11.

Cette graisse d'insecte, qui est une matière grasse, peut être produite localement, et peut être issue d'un élevage reposant sur le modèle du vertical farming, ce qui se traduit par une surface au sol nécessaire moindre par rapport à d'autres élevages, sans impact sur la déforestation. Elle présente également une empreinte écologique réduite, et constitue une alternative très intéressante aux huiles végétales. Enfin, la production de cette graisse ne se fait pas au détriment de surfaces cultivables pour l'alimentation.

Par « pesticide », on entend un composé qui est utilisé pour lutter contre des organismes considérés comme nuisibles (ou ravageurs). Le pesticide peut être choisi parmi les insecticides (composés qui s'attaquent aux insectes ravageurs), les acaricides (composés qui s'attaquent aux acariens), les fongicides (composés qui s'attaquent aux champignons), les herbicides (composés qui s'attaquent aux « adventices » ou mauvaises herbes) et les parasiticides (composés qui s'attaquent aux vers parasites). De préférence, la graisse selon l'invention est utilisée comme insecticide et/ou comme acaricide. La graisse d'insecte selon l'invention permet en effet de prévenir et/ou d'empêcher les effets des insectes nuisibles et/ou des acariens.

Comme démontré en exemples, la graisse d'insecte selon l'invention présente des propriétés pesticides, en particulier insecticides et/ou acaricides, vis-à-vis de différents insectes nuisibles, tels que des pucerons, et/ou des coléoptères, mais aussi vis-à-vis des acariens. Ladite graisse permet d'augmenter la mortalité et/ou de diminuer la capacité reproductive de ces nuisibles.

En outre, la graisse d'insecte selon l'invention diminue l'impact environnemental de la production de pesticide.

La présente invention a ainsi pour objet l'utilisation d'une graisse de larves d'insecte selon la revendication 1. La graisse d'insecte est utilisée comme insecticide et/ou comme acaricide.

Par graisse, on entend un corps gras présent à l'état solide à température ambiante (i.e. environ 20°C). De préférence, la graisse, et donc la graisse d'insecte selon l'invention, présente un point de fusion compris entre 28°C et 42°C, de préférence compris entre 30°C et 40°C, de préférence d'environ 32°C.

La graisse d'insecte selon l'invention est une graisse de larves d'insectes issus d'*Hermetia illucens.* Cette espèce est également appelée mouche soldat noire.

Le développement de cette espèce *Hermetia illucens* comprend plusieurs stades : œuf, puis larve, prénymphe, nymphe et stade adulte. Les œufs et les larves maintenues à 30°C atteignent le stade de prénymphe en 2 à 3 semaines. Les adultes émergent 10 à 14 jours après s'être transformés en nymphe. La mouche adulte ne vit qu'une dizaine de jours.

C'est la larve qui présente le plus d'intérêt : elle se nourrit principalement de coproduits organiques végétaux, et est riche en protéines et acides gras.

De préférence, la graisse d'insecte présente une teneur totale en acides gras saturés supérieure à la teneur totale en acides gras insaturés. De préférence, elle présente une teneur d'au moins 32% en poids d'acide laurique par rapport au poids total d'acides gras. Enfin, de préférence, elle présente une teneur d'au moins 13% en poids d'acides gras polyinsaturés par rapport au poids total d'acides gras.

De préférence, ladite graisse comprend de 13% à 25% en poids, de préférence de 14% à 22% en poids d'acides gras poly-insaturés par rapport au poids total d'acides gras.

De préférence ladite graisse présente le profil suivant, en poids par rapport au poids total d'acides gras :
de 60% à 80% en poids, de préférence de 65% à 75% en poids, de préférence de 70% à 75% en poids d'acides gras saturés, et
de 20% à 40% en poids, de préférence de 25% à 35% en poids, de préférence de 25% à 30% en poids d'acides gras insaturés,
de préférence de 32% à 50% en poids, de préférence de 40% à 45% en poids d'acide laurique, et/ou de préférence de 10% à 20% en poids, de préférence de 11% à 15% en poids d'acide palmitique, et/ou de préférence de 5% à 15% en poids, de préférence de 7% à 10% en poids d'acide myristique,
de préférence de 10% à 20% en poids, de préférence de 10% à 18% en poids d'acides gras mono-insaturés, et/ou de préférence de 13% à 25% en poids, de préférence de 14% à 22% en poids d'acides gras poly-insaturés, et/ou de préférence de 5% à 15% en poids, de préférence de 7% à 11% en poids d'acide oléique et ses isomères,
de préférence de 11% à 25% en poids, de préférence de 12% à 21% en poids d'acide linoléique, et/ou de préférence de 0,7% à 3% en poids, de préférence de 1% à 2,5% en poids d'acide alpha-linolénique.

La graisse d'insecte selon l'invention présente une teneur totale en acides gras saturés supérieure à la teneur totale en acides gras insaturés, et une teneur d'au moins 32% en poids d'acide laurique par rapport au poids total d'acides gras. De préférence, la graisse d'insecte une teneur d'au moins 35% en poids, de préférence d'au moins 40% en poids d'acide laurique par rapport au poids total d'acides gras.

Par acide gras, on entend un acide carboxylique à chaîne carbonée aliphatique, ladite chaîne carbonée comprenant au moins 8 atomes de carbone. De préférence, l'acide gras comprend au moins 10, de préférence au moins 12 atomes de carbone. Par acide gras saturé, on entend un acide gras ne comprenant aucune double liaison carbone-carbone. Par acide gras insaturé, on entend un acide gras comprenant une (acide gras mono-insaturé) ou plusieurs (acide gras poly-insaturé) double(s) liaison(s) carbone-carbone.

La graisse d'insecte selon l'invention provient de larves d'insecte.

De préférence, la graisse d'insecte selon l'invention est obtenue par broyage des larves puis extraction des matières grasses. De préférence, l'extraction est mécanique et sans solvant.

La graisse d'insecte selon l'invention comprend au moins 90% en poids, de préférence au moins 95% en poids, de préférence au moins 99% en poids, de lipides par rapport au poids total de graisse.

La graisse d'insecte selon l'invention présente de préférence un profil spécifique :
D'une part, elle présente une teneur totale en acides gras saturés supérieure à la teneur totale en acides gras insaturés.

D'autre part, elle est riche en acide laurique : elle présente une teneur d'au moins 32% en poids d'acide laurique par rapport au poids total d'acides gras, de préférence de 32% à 60% en poids d'acide laurique par rapport au poids total d'acides gras, de préférence de 35% à 60% en poids, de préférence de 40% à 60% en poids d'acide laurique par rapport au poids total d'acides gras.

Enfin, de préférence, elle est riche en acides gras polyinsaturés : elle présente de préférence une teneur d'au moins 13% en poids d'acides gras polyinsaturés par rapport au poids total d'acides gras, de préférence de 13% à 25% en poids, de préférence de 14% à 22% en poids d'acides gras polyinsaturés par rapport au poids total d'acides gras. Les acides gras polyinsaturés sont de préférence choisis parmi l'acide linoléique, l'acide alpha-linolénique et leurs mélanges.

Plus préférentiellement, la graisse d'insecte présente le profil suivant, en poids par rapport au poids total d'acides gras :
de 60% à 80% en poids, de préférence de 65% à 75% en poids, de préférence de 70% à 75% en poids d'acides gras saturés, et
de 20% à 40% en poids, de préférence de 25% à 35% en poids, de préférence de 25% à 30% en poids d'acides gras insaturés.

De préférence, elle comprend au moins de l'acide laurique, de l'acide palmitique et de l'acide myristique. De préférence, l'acide palmitique et l'acide myristique sont chacun présents en une teneur d'au moins 5% en poids par rapport au poids total d'acides gras.

De préférence, elle comprend de 32% à 50% en poids, de préférence de 35% à 50% en poids, de préférence de 40% à 45% en poids par rapport au poids total d'acides gras, d'acide laurique. De préférence, elle comprend de 10% à 20% en poids, de préférence de 11% à 15% en poids par rapport au poids total d'acides gras d'acide palmitique. De préférence, elle comprend de 5% à 15% en poids, de préférence de 7% à 10% en poids par rapport au poids total d'acides gras d'acide myristique.

De préférence, elle comprend également des acides gras mono-insaturés. De préférence, les acides gras mono-insaturés sont choisis parmi l'acide oléique, l'acide palmitoléique et leurs mélanges.

De préférence, elle comprend également des acides gras polyinsaturés. De préférence, elle comprend de l'acide linoléique et/ou de l'acide alpha-linolénique, de préférence un mélange d'acide linoléique et d'acide alpha-linolénique.

De préférence, elle comprend de 10% à 20% en poids, de préférence de 10% à 15% en poids d'acides gras mono-insaturés, et/ou de préférence de 13% à 25% en poids, de préférence de 14% à 22% en poids d'acides gras polyinsaturés par rapport au poids total d'acides gras.

De préférence, elle comprend de 5% à 15% en poids, de préférence de 7% à 11% en poids d'acide oléique et ses isomères par rapport au poids total d'acides gras. De préférence, elle comprend de 1% à 5% en poids, de préférence de 1,5% à 3% en poids d'acide palmitoléique par rapport au poids total d'acides gras.

De préférence, elle comprend de 11% à 25% en poids, de préférence de 12% à 21% en poids d'acide linoléique par rapport au poids total d'acides gras. De préférence, elle comprend de 0,7% à 3% en poids, de préférence de 1% à 2,5% en poids d'acide alpha-linolénique par rapport au poids total d'acides gras.

Selon un mode de réalisation alternatif, la graisse d'insecte présente une teneur totale en acides gras saturés comprise entre 40% et 50% en poids par rapport au poids total d'acides gras, et une teneur totale en acides gras insaturés comprise entre 50% et 60% en poids par rapport au poids total d'acides gras. Cette graisse est appelée « graisse alternative ». Ladite graisse alternative comprend en outre au moins 20% en poids d'acide laurique par rapport au poids total d'acides gras. Ladite graisse alternative est utilisée également comme pesticide.

La graisse d'insecte est utilisée comme pesticide, de préférence comme insecticide et/ou comme acaricide.

La graisse d'insecte peut être utilisée sur tous types de cultures. Sans que cela soit limitatif, la culture traitée avec la graisse d'insecte selon l'invention est par exemple la vigne, mais il peut s'agir de céréales, de légumes, de luzerne, de soja, de cultures maraîchères, de gazon, de bois, d'arbres ou de plantes horticoles. L'utilisation selon l'invention peut également traiter du matériel de propagation tel que des tubercules ou des rhizomes, mais aussi des graines, des plantules ou plantules repiquées et des plantes ou plantes repiquées. Elle peut également être utile pour traiter les racines. L'utilisation selon l'invention peut également traiter les parties aériennes de la plante telles que troncs, tiges ou tiges, feuilles, fleurs et fruits de la plante concernée.

Parmi les végétaux susceptibles d'être protégés par l'utilisation selon l'invention, on peut citer le cotonnier, lin, vigne, les cultures fruitières ou légumières telles que les Rosaceae sp. (par exemple les fruits à pépins comme les pommes et les poires, mais aussi les fruits à noyau comme les abricots, les amandes et les pêches), Ribesioidae sp., Juglandaceae sp., Betulaceae sp., Anacardiaceae sp., Fagaceae sp., Moraceae sp., Oleaceae sp.., Actinidacées sp., Lauracées sp., Musacées sp. (par exemple bananiers et plantins), Rubiaceae sp., Theaceae sp., Sterculiceae sp., Rutaceae sp. (par exemple citrons, oranges et pamplemousses); Solanacées sp. (par exemple tomates), Liliaceae sp., Asteraceae sp. (par exemple les laitues), Umbelliferae sp., Cruciferae sp., Chenopodiaceae sp., Cucurbitaceae sp., Papilionaceae sp. (par exemple pois), Rosaceae sp. (par exemple fraises); les principales cultures telles que Graminae sp. (par exemple le maïs, la pelouse ou les céréales telles que le blé, le riz, l'orge et le triticale), Asteraceae sp. (par exemple tournesol), Cruciferae sp. (par exemple colza), Fabacae sp. (par exemple cacahuètes), Papilionaceae sp. (par exemple soja), Solanaceae sp. (par exemple pommes de terre), Chenopodiaceae sp. (par exemple betteraves); cultures horticoles et forestières; ainsi que des homologues génétiquement modifiés de ces cultures.

Selon un mode de réalisation, la graisse d'insecte selon l'invention est appliquée par pulvérisation sur les végétaux. De préférence, la graisse d'insecte selon l'invention, solide à température ambiante, est préalablement chauffée pour être liquéfiée avant utilisation. De préférence, la graisse d'insecte selon l'invention est utilisée pure, donc telle quelle, i.e. sous forme non diluée.

Les insectes nuisibles aux cultures (« nuisibles » ou « ravageurs ») qui peuvent être contrôlés à n'importe quel stade de développement en utilisant la composition pesticide (insecticide et/ou acaricide) selon l'invention comprennent :
- les ravageurs de la classe des arachnides par exemple Tetranychus spp., Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Hemitarsonemus spp., Brevipalpus spp. De préférence, l'arachnide est *Tetranychus urticae* : c'est un acarien phytophage que l'on retrouve communément sur diverses plantes, surtout sous serres et sur plantes pérennes. Il cause des dommages sur des arbres, légumes et plantes ornementales. Il est communément appelé tétranique tisserand en raison des toiles qu'il tisse sur les plantes colonisées;
- les ravageurs de l'ordre des Coléoptères par exemple Sitophilus spp., Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp. Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus. De préférence, le Coléoptère est *Sitophilus granarius* (calandre du blé) ; c'est un Coléoptère de la famille des Curculionidae long de 3 à 4mm. Ce charançon est un ravageur important des denrées stockées. Il est aussi couramment utilisé comme espèce modèle pour les tests d'efficacité. Les adultes pondent leurs œufs à proximité des grains de céréales (froment, orge, avoine, épeautre, éventuellement farines et aliments composés). La larve se développe à l'intérieur des grains puis passe au stade adulte et le cycle recommence;
- les ravageurs de l'ordre des Hémiptères, en particulier de la famille des Aphidididae (pucerons), de préférence Sitobion spp. De préférence, l'Hémiptère est *Sitobion avenae,* dont la distribution est ubiquiste, particulièrement dans les régions tempérées de l'hémisphère nord. Ce puceron polyphage colonise des plantes de la famille des Poacae, aussi bien des plantes cultivées (orge, blé, maïs, riz) que non cultivées. Les adultes, ainsi que les larves, se nourrissent du phloème des plantes colonisées, ce qui provoque une perte de rendement en cas de pullulations. Un excès de miellat peut également entraîner le développement de fumagine. Ce puceron est par ailleurs vecteur de viroses, notamment le virus de la jaunisse nanisante de l'orge (BYDV) ;
- les ravageurs de l'ordre des Isopodes par exemple Oniscus asellus, Armadillidium vulgare, Porcellio scaber ;
- les ravageurs de l'ordre des Diplopoda par exemple Blaniulus guttulatus ;
- les ravageurs de l'ordre des Chilopoda par exemple Geophilus carpophagus, Scutigera spp. ;
- les ravageurs de l'ordre des Symphyla par exemple Scutigerella immaculata ;
- les ravageurs de l'ordre de Thysanura par exemple Lepisma saccharina ;
- les ravageurs de l'ordre des Collemboles par exemple Onychiurus armatus ;
- les ravageurs de l'ordre des Orthoptères par exemple Acheta domesticus, Gryllotalpa spp., Locusta migratoria migratohoides, Melanoplus spp., Schistocerca gregaria ;
- les ravageurs de l'ordre des Blattaria par exemple Blatta orientalis, Periplaneta americana, Leucophaea maderae, Blattella germanica ;
- les ravageurs de l'ordre des Dermaptera par exemple Forficula auricularia ;
- les ravageurs de l'ordre des Isoptera par exemple Reticulitermes spp. ;
- les ravageurs de l'ordre des Phthiraptera par exemple Pediculus humanus corporis, Haematopinus spp., Linognathus spp., Trichodectes spp., Damalinia spp. ;
- les ravageurs de l'ordre des Thysanoptera par exemple Hercinothrips femoralis, Thrips tabaci, Thrips palmi, Frankliniella accidentis ;
- les ravageurs de l'ordre des Hétéroptères par exemple Eurygaster spp., Dysdercus intermedius, Piesma quadrata, Cimex lectularius, Rhodnius prolixus, Triatoma spp ;
- les ravageurs de l'ordre des homoptères, par exemple Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp;
- les ravageurs de l'ordre des Lépidoptères par exemple Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae;
- les ravageurs de l'ordre des Hyménoptères par exemple Diprion spp., Hoplocampa spp., Lasius spp., Monomorium pharaonis, Vespa spp;
- les ravageurs de l'ordre des Diptères par exemple Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.;
- les ravageurs de l'ordre des Siphonaptères par exemple Xenopsylla cheopis, Ceratophyllus spp. ;
- les neamnotes phytoparasites telles que Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

De préférence, les nuisibles sont des insectes et/ou des acariens. De préférence, les insectes sont des ordres hémiptères, thysanoptères, coléoptères ou lépidoptères. De préférence, les nuisibles sont des pucerons, des acariens ou des coléoptères.

De préférence, lorsque les nuisibles sont des pucerons ou des coléoptères, la graisse d'insecte selon l'invention est utilisée à une dose allant de 0,0001 à 0,001 L/ha, de préférence de 0,0002 à 0,0008 L/ha.

De préférence, lorsque les nuisibles sont des acariens, la graisse d'insecte selon l'invention est utilisée à une dose allant de 0,001 à 0,01 L/ha, de préférence de 0,002 à 0,006 L/ha.

De préférence, la graisse d'insecte selon l'invention permet d'augmenter la mortalité des ravageurs et/ou de diminuer la capacité reproductive des ravageurs.

Typiquement, la graisse selon l'invention augmente la mortalité des ravageurs d'au moins 10 fois, typiquement après 48h d'exposition, par rapport à une population de ravageurs non traités.

Par « diminuer la capacité reproductive » des ravageurs, on entend que la graisse selon l'invention ralentit la multiplication desdits ravageurs et/ou diminue le nombre de pontes. De préférence, la multiplication des ravageurs est mesurée par le taux d'accroissement de la population de ravageurs. Ce taux d'accroissement peut être mesuré comme indiqué dans l'exemple 2 ci-dessous.

Typiquement, la graisse selon l'invention diminue le taux d'accroissement d'une population de ravageurs d'au moins 10%, de préférence d'au moins 15%, typiquement après 48h d'exposition, par rapport à une population de ravageurs non traités.

Typiquement, la graisse selon l'invention diminue le nombre de pontes d'au moins 20%, de préférence d'au moins 30%, typiquement après 48h d'exposition, par rapport à une population de ravageurs non traités.

La présente invention se rapporte également à un procédé de traitement d'une culture, comprenant l'application d'une graisse de larves d'insecte selon l'invention sur ladite culture, selon la revendication 11.

La graisse d'insecte et la culture sont telles que décrites précédemment.

L'application de la graisse d'insecte sur la culture peut être effectuée par tous moyens. De préférence, la graisse d'insecte selon l'invention est appliquée par pulvérisation sur la culture. La graisse d'insecte selon l'invention peut être préalablement chauffée pour être liquéfiée avant utilisation. De préférence, la graisse d'insecte selon l'invention est utilisée pure, donc telle quelle, i.e. sous forme non diluée.

L'invention est maintenant illustrée par les exemples qui suivent.

### Exemple 1 : Préparation de graisse d'insecte selon l'invention

On extrait la graisse de larves d'*Hermetia illucens.*

Les larves sont élevées et nourries avec un substrat d'origine 100% végétale. L'extraction est mécanique et sans solvant. Le procédé d'extraction peut comprendre une extraction par pressage mécanique des larves préalablement broyées et chauffées afin d'en extraire les matières grasses. Alternativement, il peut également comprendre une séparation des matières grasses par décantation triphasique des larves préalablement broyées, chauffées et mélangées à une faible proportion d'eau.

La graisse obtenue est solide (figée) à température ambiante, et présente un point de fusion de 25 à 45°C.

Cette graisse est un ingrédient alimentaire pour animaux, qui est impropre à la consommation humaine.

Le profil d'acides gras est le suivant (% en poids par rapport au poids total d'acides gras):
Total acides gras saturés : de 65% à 75%.
11-15% d'acide palmitique, 38-45% d'acide laurique et 7-10% d'acide myristique.
Total acides gras insaturés : de 25% à 35%.
10-18% d'acides gras mono-insaturés et 14-22% d'acides gras poly-insaturés.
7-15% d'acide oléique et isomères, 1-2,5% d'acide alpha-linolénique et 11-20% d'acide linoléique.

### Exemple 2 : Utilisation de graisse d'insecte selon l'invention comme pesticide (insecticide) sur les pucerons Sitobion avenae

Les organismes utilisés sont issus de l'élevage du laboratoire.

### Substances testées :

- Graisse d'insecte selon l'exemple 1
- Témoin positif (TS) :
Toxique standard, nom commercial: Karaté Zéon
Substance active: Lambda-cyhalothrine
Concentration: 100 g/l
Formulation: suspension (CS)
Dose testée: 0.01 l de produit formulé dans une bouillie de 200 l/ha

| | | |
|---|---|---|
| Dilution D1 | 1 ml de Karaté Zéon CS dans 200 ml d'eau | [5.0 ml/l] |
| Dilution D2 | 1 ml de D1 + 99 ml d'eau | [0.05 ml/l] |

- Témoin négatif : Eau.

### Unité de test, application et design expérimental

Chaque unité expérimentale est composée de 8 brins d'escourgeon au sein d'un même pot. La veille de l'application des produits, chaque pot a été infesté avec une quarantaine de pucerons. Les pots ont été isolés individuellement à l'aide d'un manchon en plexiglas muni d'ouvertures grillagées pour permettre l'aération.

Peu avant la pulvérisation, les pucerons ont été comptés dans chaque pot. Ensuite, le temps de la pulvérisation, le manchon a été retiré et les plantes sont traitées. Les manchons ont ensuite été replacés sur chaque pot. 48h après la pulvérisation, les pucerons ont été à nouveau comptés. Chaque traitement comporte 5 répétitions.

### Application des substances testées

La pulvérisation a été réalisée à l'aide d'un aérographe (Harder & Steenbeck), connecté à un compresseur pour amener la pression de pulvérisation à 2 bars pour les contrôles positifs et négatifs et 4 bars pour la graisse d'insecte (celle-ci étant plus visqueuse). Les traitements ont été pulvérisés de gauche à droite et de droite à gauche (en zigzag), en démarrant du coin supérieur gauche d'un cadrant de 1 m² et en finissant dans le coin inférieur droit. La pulvérisation suit les 9 lignes placées à intervalles réguliers, horizontalement et verticalement sur le cadran, formant des carrés de 10 cm² pour assurer une pulvérisation homogène. Les 5 pots appartenant au même traitement étaient placés au centre du cadran. Le contrôle eau a été pulvérisé en premier, ensuite la graisse d'insecte et enfin, le contrôle toxique. L'appareil a été rincé entre chaque traitement avec du méthanol, suivi par de l'eau. Afin de permettre la pulvérisation de la graisse (solide à température ambiante), celle-ci ainsi que l'aérographe étaient maintenus à une température d'environ 45°C à l'aide d'une plaque chauffante juste avant la pulvérisation.

### Observations biologiques

L'efficacité du produit a été évaluée en comparant le taux d'accroissement de la population de pucerons (effectif après 48h/effectif initial) et en le corrigeant avec celui du contrôle, en utilisant la formule d'Abbot (Abott, 1925):
[Math 1] $DRc = \left(IRt-IRo\right) / IRt$ où DRc= réduction du taux d'accroissement de la population pour le produit, IRo= taux d'accroissement de la population observé pour le produit, IRt = Taux d'accroissement de la population observé pour le contrôle.

### Analyses des données et traitements statistiques

Les données ont été analysées avec le logiciel R, version 4.1.2. Le taux d'accroissement de population a été analysé au moyen de GLM. Les moyennes des taux d'accroissement de population ont été comparées grâce au test de Dunnett.

### Résultats et discussion

Les résultats sont présentés dans le tableau 1. Le test est considéré comme valide étant donné qu'une réduction de plus de 80% de la population de pucerons a été observée dans le contrôle toxique après 48h.

### Accroissement moyen de la population de Sitobion avenae sur plants d'escourgeons 48h après traitement. Le test de comparaison de moyenne est un contraste de Dunnett (* = p<0,05, ** = p<0,01 et ***=p<0,001). Réduction du taux d'accroissement de la population (%) par rapport au témoin

**[Tableau 1]**

| Produits testés | Accroissemen moyen (± sd) | | | | Réduction du taux d'accroissement de la population (%) |
|---|---|---|---|---|---|
| Contrôle eau | 1,42 | ± | 0,27 | | - |
| Contrôle toxique | 0,20 | ± | 0,06 | *** | 86,18 |
| Graisse d'insecte | 1,14 | ± | 0,17 | * | 19,63 |

Le test réalisé montre une réduction significative du taux d'accroissement de la population de pucerons de 19,63% dans le traitement avec la graisse d'insecte selon l'invention par rapport au contrôle eau. La graisse d'insecte a un effet sur le taux de multiplication des pucerons, bien que celui-ci reste bien inférieur à la lambda-cyhalothrine utilisée comme contrôle toxique (réduction du taux d'accroissement de 86,18%).

Néanmoins, on observe que la population de pucerons a augmenté 48h après le traitement à la graisse (taux d'accroissement moyen > 1), contrairement au contrôle toxique, qui a permis une réduction du nombre de pucerons. Cela indique que l'activité de la graisse agit peu ou pas sur la survie des pucerons, mais bien sur leur taux de multiplication.

La graisse d'insecte montre donc un potentiel pour limiter le taux d'accroissement des populations de *Sitobion avenae* sur escourgeons, bien que ce potentiel reste limité puisqu'il ne fait que ralentir la multiplication des pucerons, sans diminuer leur population initiale.

### Conclusion:

En comparaison au contrôle eau, la graisse d'insecte pure selon l'invention a permis une réduction significative du taux d'accroissement de la population de *Sitobion avenae* sur escourgeon (19,63%) après 48h d'exposition. Contrairement au contrôle toxique, la graisse d'insecte semble ralentir la multiplication des pucerons mais ne permet pas de tuer les pucerons initialement présents (taux d'accroissement moyen de la population de 1,14).

### Exemple 3 : Utilisation de graisse d'insecte selon l'invention comme pesticide (acaricide) sur les acariens Tetranychus urticae

Les organismes utilisés sont des femelles adultes issues d'un élevage de laboratoire.

### Substances testées :

- Graisse d'insecte selon l'exemple 1
- Témoin positif (TS) :
Toxique standard, nom commercial: Mavrik 2F
Substance active: Tau-fluvalinate
Concentration: 240 g/l
Formulation: emulsion aqueuse concentrée (EW)
Dose testée: 0.2 l de produit formulé dans une bouillie de 200 l/ha

| | | |
|---|---|---|
| Dilution D1 | 1 ml de Mavrik 2F dans 100 ml d'eau | [10.0 ml/l] |
| Dilution D2 | 10 ml de D1 + 90 ml d'eau | [1.0 ml/l] |

- Témoin négatif : Eau.

### Unité de test, application et design expérimental

Des rondelles de feuilles de haricot (Ø 30 mm) ont été découpées puis placées sur un tissu humide, sur une boite de Petri ouverte. Dix acariens femelles ont été déposés sur chaque disque foliaire à l'aide d'un fin pinceau. Après 24h, les oeufs pondus ont été retirés des feuilles avant l'application des différents traitements par pulvérisation. Chaque traitement a été répété 4 fois.

### Application des substances testées

La pulvérisation a été réalisée à l'aide d'un aérographe (Harder & Steenbeck), connecté à un compresseur pour amener la pression de pulvérisation à 2 bars pour les traitements contrôles (négatifs et positifs) et 4 bars pour la graisse (celle-ci étant plus visqueuse). Les traitements étaient pulvérisés de gauche à droite et de droite à gauche, en démarrant du coin supérieur gauche d'un cadrant de 1 m² et en finissant dans le coin droit. La pulvérisation suit les 9 lignes placées à intervalles réguliers, horizontalement et verticalement sur le cadran, formant des carrés de 10 cm² pour assurer une pulvérisation homogène. Le contrôle a été pulvérisé en premier, ensuite la graisse d'insecte et enfin, le témoin positif. Afin de permettre la pulvérisation de la graisse (solide à température ambiante), celle-ci était maintenue aux environs de 45°C en chauffant la graisse ainsi que l'aérographe juste avant l'application à l'aide d'une plaque chauffante.

### Observations biologiques

Les acariens morts et vivants ont été comptés 48h après le traitement, ainsi que les oeufs pondus. L'efficacité du traitement a été évaluée sur base de la mortalité et de la fécondité.

### Analyses des données et traitements statistiques

La mortalité a été mesurée comme étant la réduction de l'effectif initial corrigée par rapport au contrôle, via la formule d'Abbot (Abbott, 1925) : [Math 2] $Mc = \left[\left(Mo-Mt\right)/\left(100-Mt\right)\right] ∗ 100$

Où Mc = mortalité corrigée (%), Mo= mortalité observée dans le groupe traité (%) et Mt= mortalité de contrôle (%).

La fertilité a été calculée sur base du nombre d'œufs pondus en 48h divisé par le nombre moyen de femelles vivantes : [Math 3] $Fertilit é = nbre d ′ oe ufs apr è s 48 h / \left(eff t0+eff 48h\right) \left./2\right)$

La réduction de fertilité a également été corrigée par rapport au contrôle via la formule d'Abbott (Abbott, 1925) : [Math 4] $FRc = \left(\left(Ft-Fo\right)/Ft\right) ∗ 100$ Où FRc = Réduction de la fertilité corrigée (%), Fo = Fertilité observée dans le groupe traité et Ft = Fertilité dans le contrôle.

Les données ont été analysées avec le logiciel R, version 4.1.2. Le pourcentage de mortalité et la fertilité ont été analysés au moyen de GLM binomiales. Les moyennes ont été comparées au témoin négatif (eau) à l'aide d'un test de Dunnett.

### Résultats et discussion

Les résultats sont présentés dans le tableau 2 (la graisse d'insecte est indiquée « huile d'insecte »). Le test est considéré comme valide étant donné que le contrôle toxique a permis une réduction très significative de la population d'acariens (Mortalité corrigée de 71,1%) par rapport au contrôle négatif, et que la mortalité dans le témoin eau est inférieure à 10% (5%).

### Mortalité moyenne, production d'œufs et réduction de fertilité de femelles Tetranichus urticae 48h après exposition à des rondelles de feuilles de haricots traitées. Les comparaisons de moyennes ont été faites par un contraste de Dunnett (* = p<0,05, ** = p<0,01 et ***=p<0,001)

**[Tableau 2]**

| **Produits testés** | **mortalité (%)** | **Mortalité corrigée (%)** | | **Nombre d'œufs par femelle** ± **sd** | | **Réduction de la fertilité (%)** |
|---|---|---|---|---|---|---|
| Contrôle eau | 5,0 ± 5,8 | - | | 5,8 ± 1,1 | | - |
| Contrôle toxique | 72,5 ± *22,2* | 71,1 | *** | 1,5 ± 0,9 | *** | 74,35 |
| Huile d'insecte | 12,5 ± 25,0 | 7,9 | | 2,7 ± 0,5 | *** | 54,17 |

Les résultats indiquent que la graisse d'insecte n'a pas eu d'effet significatif sur la survie des acariens (mortalité corrigée de 7,9%). Cependant, elle a permis une réduction significative de la fertilité des femelles par rapport à un traitement à l'eau (54,17%). Visuellement, les acariens présents sur les feuilles traitées avec la graisse d'insecte avaient une activité ralentie. Leurs mouvements semblaient entravés par le fait que les toiles que ces acariens tisserands tissent naturellement étaient recouvertes de graisse.

### Conclusion:

La graisse d'insecte appliquée par pulvérisation foliaire n'a pas montré d'effet acaricide après 48h (Mortalité corrigée de 7.9%). Cependant, les femelles exposées à la graisse d'insecte ont montré une diminution significative du nombre de pontes (54.17%) en comparaison avec le contrôle eau. De plus, la graisse d'insecte semblerait ralentir l'effet des tétranyques.

### Exemple 4 : Utilisation de graisse d'insecte selon l'invention comme pesticide (insecticide) sur les coléoptères Sitophilus granarius

Les adultes utilisés pour le test ont été issus de l'élevage du laboratoire maintenu à température ambiante sur des grains de blé.

### Substances testées :

- Graisse d'insecte selon l'exemple 1
- Témoin positif (TS) :
   Toxique standard, nom commercial: Karaté Zéon
   Substance active: Lambda-cyhalothrine
   Concentration: 100 g/l
   Formulation: suspension (CS)
   Dose testée: 0.01 l de produit formulé dans une bouillie de 200 l/ha
- Témoin négatif : Eau ou cire d'abeille.

### Unité de test, application et design expérimental

L'unité de test est composée d'une boite de Pétri en verre de 9 cm de diamètre. Dans cette unité, il a été coulé soit la graisse d'insecte pure, soit de la cire d'abeille ou un mélange de cire d'abeille et de graisse d'insecte dans les proportions suivantes : 50%, 25%, 12.5% et 6.25%. Avant d'être coulées, la graisse d'insecte et la cire d'abeille ont été préalablement chauffées à 70°C en étuve.

Pour chaque traitement, 4 boites de Pétri sont confectionnées. Dans chacune des boites, 10 insectes seront libérés. L'ensemble des boites est placé à température ambiante (20°C +/-2°C).

### Application des substances testées

L'eau et la lambda-cyhalothrine ont été appliqués sur les boites de Petri (vide ou avec de la cire) à l'aide d'une tour de Burgerjon sur base d'un volume de 200 l/ha. L'appareil a été calibré pour délivrer 2mg/cm² +/-10% correspondant à une application de 200 l/ha +/-10%. L'application a été contrôlée par gravimétrie par pesée d'une plaque en verre avant et après pulvérisation. Les produits ont été appliqués dans l'ordre suivant : eau, lambda-cyhalothrine.

### Observations biologiques

Après la libération des insectes dans les boites, le statut de chaque individu a été évalué après 1h, 1h30 2h30, 4h30, 24h et 96h d'exposition et classé :
Vivant : aucun signe d'intoxication, comportement normal ;
Affecté : signe d'intoxication ;
Mort : aucun signe de vie.

### Analyses des données et traitements statistiques

Pour chaque traitement, les mortalités observées ont été corrigées selon la formule d'Abbott (Abbott, 1925) : [Math 5] $Mc = \left[\left(Mo-Mt\right)/\left(100-Mt\right)\right] ∗ 100$

Où Mc = mortalité corrigée (%), Mo= mortalité observée dans le groupe traité (%) et Mt= mortalité de contrôle (%).

Les données ont été analysées avec le logiciel R, version 4.1.2. Le pourcentage de mortalité a été calculé au moyen de GLM binomiales. Les moyennes ont été comparées grâce au test t de Tuckey.

### Résultats et discussion

Les résultats obtenus sont énumérés dans le tableau 3. Le test est considéré comme valide avec une mortalité nulle dans les témoins négatifs et une mortalité dépassant les 90 % avec l'insecticide de référence appliqué sur verre.

### Mortalité moyenne ± écart-type (%) après 1h, 1h30, 2h30, 4h30, 24h et 96h après libération des insectes dans des boites de Petri contenant de la graisse d'insecte (H) pure et diluée dans la cire d'abeille, de la cire traitée avec de l'eau (TG) ou de la lambda-cyhalothrine (TSG), traitées directement avec de l'eau (T-) ou de la lambda-cyhalothrine (TS). Les mortalités portant la même lettre ne sont pas significativement différentes (test t de Tuckey)

**[Tableau 3]**

| **Traitement** | **Effectif** | **Mortalité ± s.d. (%)** | | | | | | | | | | | |
|---|---|---|---|---|---|---|---|---|---|---|---|---|---|
| | | **1h** | | **1h30** | | **2h30** | | **4h30** | | **24h** | | **96h** | |
| Contrôle eau (T-) | 40 | 0 ± 0 | a | 0 ± 0 | ab | 0 ± 0 | a | 0 ± 0 | a | 0 ± 0 | ab | 0 ± 0 | a |
| Contrôle cire (TG) | 40 | 0 ± 0 | a | 0 ± 0 | ab | 0 ± 0 | a | 0 ± 0 | a | 0 ± 0 | ab | 0 ± 0 | a |
| Graisse 6,25% | 40 | 0 ± 0 | a | 0 ± 0 | ab | 0 ± 0 | a | 0 ± 0 | a | 2.5 ± 5 | ab | 5 ± 5.8 | a |
| Graisse 12,5% | 40 | 0 ± 0 | a | 0 ± 0 | ab | 0 ± 0 | a | 0 ± 0 | a | 0 ± 0 | ab | 2.5 ± 5 | a |
| Graisse 25% | 40 | 0 ± 0 | a | 0 ± 0 | ab | 0 ± 0 | a | 0 ± 0 | a | 0 ± 0 | ab | 0 ± 0 | a |
| Graisse 50% | 40 | 0 ± 0 | a | 0 ± 0 | ab | 0 ± 0 | a | 0 ± 0 | a | 0 ± 0 | ab | 0 ± 0 | a |
| Graisse 100% | 40 | 10 ± 8.2 | a | 40 ±18.3 | a | 52.5 ± 25 | b | 72.5 ± 21.6 | b | 95 ± 10 | a | 97.5 ± 5 | b |
| Karaté Zéon, (TS) | 40 | 0 ± 0 | a | 2.5 ± 5 | b | 25 ± 5.8 | ab | 52.5 ± 9.6 | b | 45 ± 5.8 | b | 97.5 ± 5 | b |
| Karaté Zéon sur cire (TSG) | 40 | 0 ± 0 | a | 2.5 ± 5 | b | 5 ± 5.8 | a | 12.5 ± 5 | a | 22.5 ± 15 | ab | 87.5 ± 12.6 | b |

Après 1h30 d'exposition, la graisse d'insecte pure a montré une toxicité aigüe significativement supérieure à l'insecticide de référence, lambda-cyhalotrine, tant appliqué sur verre que sur cire. Cette toxicité supérieure de la graisse d'insecte s'est maintenue durant les premières 24h. A la fin du test, soit au bout de 96h, la toxicité de la graisse d'insecte pure était comparable à celle observée avec l'insecticide de référence.

Quant aux différentes dilutions de la graisse d'insecte dans la cire d'abeille, étonnamment aucune toxicité n'a été observée, quelle que soit la concentration testée. Plusieurs hypothèses peuvent être formulées sur l'absence d'effet toxique suite à cette dilution :
(1) une dilution trop forte bien qu'un facteur 2x est couramment utilisé ;
(2) une séquestration des composés toxiques de la graisse d'insecte par la cire ;
(3) une dégradation des principes actifs de la graisse d'insecte lors du mélange avec la cire chaude.

### Conclusion:

La graisse d'insecte pure a un effet insecticide par contact sur les adultes de *Sitophilus granarius* comparable à celui de la référence toxique Karaté Zéon mais agit plus rapidement que ce dernier. Dès la première heure d'exposition, une mortalité moyenne de 40% a été observée avec la graisse d'insecte alors qu'avec la référence toxique la mortalité moyenne était de 2.5%. Au contraire, lors de la dilution de cette graisse d'insecte avec de la cire d'abeille, aucune toxicité à l'égard de *S. granarius* n'a pu être mise en évidence aux concentrations testées : 50%, 25%, 12.5% ou 6.25%.

## Revendications

1. Utilisation non-thérapeutique d'une graisse de larves d'insecte issues d'*Hermetia illucens* comme insecticide et/ou comme acaricide.

2. Utilisation selon la revendication 1, **caractérisée en ce que** la graisse de larves d'insecte présente une teneur totale en acides gras saturés supérieure à la teneur totale en acides gras insaturés.

3. Utilisation selon la revendication 2 **caractérisée en ce que** la graisse de larves d'insecte présente une teneur d'au moins 32% en poids d'acide laurique par rapport au poids total d'acides gras.

4. Utilisation selon l'une des revendications précédentes, **caractérisée en ce que** la graisse de larves d'insecte comprend une teneur d'au moins 13% en poids d'acides gras polyinsaturés par rapport au poids total d'acides gras de la graisse ; de préférence elle comprend de 13% à 25% en poids, de préférence de 14% à 22% en poids d'acides gras polyinsaturés par rapport au poids total d'acides gras.

5. Utilisation selon l'une des revendications précédentes, **caractérisée en ce que** la graisse de larves d'insecte comprend une teneur d'au moins 35% en poids, de préférence d'au moins 40% en poids d'acide laurique par rapport au poids total d'acides gras.

6. Utilisation selon l'une des revendications précédentes, **caractérisée en ce que** la graisse de larves d'insecte est appliquée sur une culture choisie parmi les céréales, la vigne, les légumes, la luzerne, le soja, les cultures maraîchères, le gazon, le bois, les arbres et les plantes horticoles.

7. Utilisation selon l'une des revendications précédentes, **caractérisée en ce que** la graisse de larves d'insecte est appliquée par pulvérisation sur une culture, de préférence elle est préalablement chauffée pour être liquéfiée avant utilisation, de préférence elle est utilisée pure.

8. Utilisation selon l'une des revendications précédentes, comme insecticide et/ou comme acaricide, vis-à-vis de ravageurs choisis parmi les ravageurs de la classe des arachnides, les ravageurs de l'ordre des Coléoptères, les ravageurs de l'ordre des Hémiptères, les ravageurs de l'ordre des Isopodes, les ravageurs de l'ordre des Diplopoda, les ravageurs de l'ordre des Chilopoda, les ravageurs de l'ordre des Symphyla, les ravageurs de l'ordre de Thysanura, les ravageurs de l'ordre des Collemboles, les ravageurs de l'ordre des Orthoptères, les ravageurs de l'ordre des Blattaria, les ravageurs de l'ordre des Dermaptera, les ravageurs de l'ordre des Isoptera, les ravageurs de l'ordre des Phthiraptera, les ravageurs de l'ordre des Thysanoptera, les ravageurs de l'ordre des Hétéroptères, les ravageurs de l'ordre des homoptères, les ravageurs de l'ordre des Lépidoptères, les ravageurs de l'ordre des Hyménoptères, les ravageurs de l'ordre des Diptères, les ravageurs de l'ordre des Siphonaptères et les neamnotes phytoparasites.

9. Utilisation selon l'une des revendications précédentes, comme insecticide et/ou comme acaricide, vis-à-vis de ravageurs choisis parmi les insectes des ordres hémiptères, thysanoptères, coléoptères et lépidoptères et les acariens, de préférence les insectes sont des pucerons ou des coléoptères.

10. Utilisation selon la revendication 8 ou 9, **caractérisée en ce que** la graisse de larves d'insecte augmente la mortalité des ravageurs et/ou diminue la capacité reproductive des ravageurs.

11. Procédé de traitement d'une culture choisie parmi la vigne, les céréales, les légumes, la luzerne, le soja, les cultures maraîchères, le gazon, le bois, les arbres et les plantes horticoles, comprenant l'application d'une graisse de larves d'insecte issues d'*Hermetia illucens* selon l'une des revendications 1 à 5 sur ladite culture.

## Patentansprüche

1. Nichttherapeutische Verwendung eines Fetts von Insektenlarven, die von *Hermetia illucens* stammen, als Insektizid und/oder als Akarizid.

2. Verwendung nach Anspruch 1, **dadurch gekennzeichnet, dass** das Fett von Insektenlarven einen Gesamtgehalt an gesättigten Fettsäuren aufweist, der höher ist als der Gesamtgehalt an ungesättigten Fettsäuren.

3. Verwendung nach Anspruch 2, **dadurch gekennzeichnet, dass** das Fett von Insektenlarven einen Gehalt von mindestens 32 Gew.-% Laurinsäure, bezogen auf das Gesamtgewicht der Fettsäuren, aufweist.

4. Verwendung nach einem der vorhergehenden Ansprüche, **dadurch gekennzeichnet, dass** das Fett von Insektenlarven einen Gehalt von mindestens 13% an Gewicht an mehrfach ungesättigten Fettsäuren, bezogen auf das Gesamtgewicht der Fettsäuren des Fetts, umfasst; vorzugsweise umfasst es 13 bis 25 Gew.-%, vorzugsweise 14 bis 22 Gew.-% mehrfach ungesättigte Fettsäuren, bezogen auf das Gesamtgewicht der Fettsäuren.

5. Verwendung nach einem der vorhergehenden Ansprüche, **dadurch gekennzeichnet, dass** das Fett von Insektenlarven einen Gehalt von mindestens 35 Gew.-%, vorzugsweise von mindestens 40 Gew.-% Laurinsäure, bezogen auf das Gesamtgewicht der Fettsäuren, umfasst.

6. Verwendung nach einem der vorhergehenden Ansprüche, **dadurch gekennzeichnet, dass** das Fett von Insektenlarven auf eine Kultur aufgebracht wird, die aus Getreide, Weinreben, Gemüse, Luzerne, Soja, Gemüsekulturen, Rasen, Holz, Bäumen und Gartenbaupflanzen ausgewählt ist.

7. Verwendung nach einem der vorhergehenden Ansprüche, **dadurch gekennzeichnet, dass** das Fett von Insektenlarven durch Sprühen auf eine Kultur aufgebracht wird, vorzugsweise wird es zuvor erhitzt, um vor der Verwendung verflüssigt zu werden, vorzugsweise wird es rein verwendet.

8. Verwendung nach einem der vorhergehenden Ansprüche als Insektizid und/oder als Akarizid gegen Schädlinge, die ausgewählt sind aus Schädlingen der Klasse der Spinnentiere, Schädlingen der Ordnung der Käfer, Schädlingen der Ordnung der Schnabelkerfe, Schädlingen der Ordnung der Asseln, Schädlingen der Ordnung der Diplopoda, Schädlingen der Ordnung der Chilopoda, Schädlingen der Ordnung der Symphyla, Schädlingen der Ordnung der Thysanura, Schädlingen der Ordnung der Springschwänze, Schädlingen der Ordnung der Heuschrecken, Schädlingen der Ordnung der Blattaria, Schädlingen der Ordnung der Dermaptera, Schädlingen der Ordnung der Isoptera, Schädlingen der Ordnung der Phthiraptera, Schädlingen der Ordnung der Thysanoptera, Schädlingen der Ordnung der Wanzen, Schädlingen der Ordnung der Homopteren, Schädlingen der Ordnung der Schmetterlinge, Schädlingen der Ordnung der Hautflügler, Schädlingen der Ordnung der Zweiflügler, Schädlingen der Ordnung der Siphonaptera und phytoparasitären Nematoden.

9. Verwendung nach einem der vorhergehenden Ansprüche als Insektizid und/oder als Akarizid gegen Schädlinge, die ausgewählt sind aus Insekten der Ordnungen der Hemipteren, Thysanopteren, Coleopteren und Lepidopteren sowie Milben, vorzugsweise sind die Insekten Blattläuse oder Käfer.

10. Verwendung nach Anspruch 8 oder 9, **dadurch gekennzeichnet, dass** das Fett von Insektenlarven die Sterblichkeit der Schädlinge erhöht und/oder die Fortpflanzungsfähigkeit der Schädlinge verringert.

11. Verfahren zur Behandlung einer Kultur, die aus Weinreben, Getreide, Gemüse, Luzerne, Soja, Gemüsekulturen, Rasen, Holz, Bäumen und Gartenbaupflanzen ausgewählt ist, umfassend das Aufbringen eines Fetts von Insektenlarven, die von *Hermetia illucens* stammen, nach einem der Ansprüche 1 bis 5 auf die genannte Kultur.

## Claims

1. Non-therapeutic use of insect larval fat from *Hermetia illucens* as an insecticide and/or as an acaricide.

2. Use according to claim 1, **characterized in that** the insect larval fat has a total content of saturated fatty acids greater than the total content of unsaturated fatty acids.

3. Use according to claim 2, **characterized in that** the insect larval fat has a content of at least 32% by weight of lauric acid relative to the total weight of fatty acids.

4. Use according to one of the preceding claims, **characterized in that** the insect larval fat comprises a content of at least 13% by weight of polyunsaturated fatty acids relative to the total weight of fatty acids of the fat; preferably it comprises from 13% to 25% by weight, preferably from 14% to 22% by weight of polyunsaturated fatty acids relative to the total weight of fatty acids.

5. Use according to one of the preceding claims, **characterized in that** the insect larval fat comprises a content of at least 35% by weight, preferably of at least 40% by weight of lauric acid relative to the total weight of fatty acids.

6. Use according to one of the preceding claims, **characterized in that** the insect larval fat is applied to a crop selected from cereals, grapevines, vegetables, alfalfa, soybeans, vegetable crops, turf, wood, trees and horticultural plants.

7. Use according to one of the preceding claims, **characterized in that** the insect larval fat is applied by spraying onto a crop, preferably it is heated beforehand to be liquefied before use, preferably it is used pure.

8. Use according to one of the preceding claims, as an insecticide and/or as an acaricide, against pests selected from pests of the class Arachnida, pests of the order Coleoptera, pests of the order Hemiptera, pests of the order Isopoda, pests of the order Diplopoda, pests of the order Chilopoda, pests of the order Symphyla, pests of the order Thysanura, pests of the order Collembola, pests of the order Orthoptera, pests of the order Blattaria, pests of the order Dermaptera, pests of the order Isoptera, pests of the order Phthiraptera, pests of the order Thysanoptera, pests of the order Heteroptera, pests of the order Homoptera, pests of the order Lepidoptera, pests of the order Hymenoptera, pests of the order Diptera, pests of the order Siphonaptera and phytoparasitic Nematodes.

9. Use according to one of the preceding claims, as an insecticide and/or as an acaricide, against pests selected from insects of the orders Hemiptera, Thysanoptera, Coleoptera and Lepidoptera and mites, preferably the insects are aphids or beetles.

10. Use according to claim 8 or 9, **characterized in that** the insect larval fat increases the mortality of the pests and/or decreases the reproductive capacity of the pests.

11. Method for treating a crop selected from grapevines, cereals, vegetables, alfalfa, soybeans, vegetable crops, turf, wood, trees and horticultural plants, comprising applying insect larval fat from *Hermetia illucens* according to one of claims 1 to 5 to said crop.
